# EUROPEAN PATENT APPLICATION

(11) **EP 0 840 115 A2**
(43) Date of publication of application: **06.05.1998**
(21) Application number: 97119090.5
(22) Date of filing: 31.10.1997
(51) Int. Cl.: G01N 27/447

(54) **DNA base sequencer**

(30) Priority: 05.11.1996 JP 308764/96
(71) Applicant: HITACHI ELECTRONICS ENGINEERING CO., LTD., Shibuya-ku, Tokyo 150 (JP)
(72) Inventor: Nemoto, Ryoji, Honjo-shi, Saitama-ken (JP); Mishina, Yoshinori, Saitama-ken (JP)
(74) Representative: Strehl Schübel-Hopf & Partner

(57) **Abstract**

The improved DNA base sequencer comprises a flat plate type gel electrophoretic means that has a multiple of tracks for electrophoresing DNA fragments and which is held in a vertical position, a light exciting laser light applying means that applies laser light to the respective tracks in said electrophoretic means from one lateral side thereof in such a way that it crosses said tracks at right angles, and a fluorescence detecting means that detects the fluorescence as generated from the DNA fragments illuminated with the laser light and which converts the detected fluorescence to an electric signal, and it is characterized in that the laser light applying means comprises a laser diode. This apparatus uses exciting light illuminating optics which is simple in construction and which yet is capable of spreading a laser beam to an elliptical form in the direction of electrophoresis.

## Description

### BACKGROUND OF THE INVENTION

This invention relates to a DNA base sequencer, or an apparatus for determining the base sequences of DNA. More particularly, this invention relates to an apparatus with which the base sequences of DNA can be determined by fluorescent labelling in an efficient and rapid manner.

Gel electrophoresis is practiced extensively as a technique for determining the base sequences of DNA and other proteins. Conventionally, the sample to be subjected to electrophoresis is labelled with a radioisotope for analysis but this method has had the problem of being painstaking and time-consuming. Furthermore, the use of radioactive substances always calls for utmost safety and management and analysis cannot be performed in areas other than facilities that clear certain regulations. Under the circumstances, a method that uses fluorophores to label the sample and which detects fluorescence as emitted upon irradiation with light is being reviewed.

In this method, fluorophore-labelled DNA fragments are caused to migrate through a gel and a light excitation portion and a photodetector are provided for each electrophoresis track in an area 15 - 20 cm below the start point of electrophoresis. The DNA fragments are assayed as they pass through the line connecting the light excitation portion and the photodetector. A typical procedure of the method is described below. First, using as template the DNA chain to be determined for its base sequence, DNAs of various lengths with known terminal base species are replicated by a method involving an enzymatic reaction (the dideoxy method). Then, the replicated DNAs are labelled with a fluorophore. Stated more specifically, there are prepared a group of adenine (A) fragments, a group of cytosine (C) fragments, a group of guanine (G) fragments and a group of thymine (T) fragments, all being labelled with a fluorophore. A mixture of these fragment groups is injected into separate lane grooves in an electrophoretic gel and, thereafter, a voltage is applied at opposite ends of the gel. Since DNA is a chained polymer with negative charges, it will move across the gel at a rate in inverse proportion to its molecular weight. The shorter the DNA chain (the smaller its molecular weight), the faster will it move and vice versa; this is the principle behind the fractionation of DNA by molecular weight.

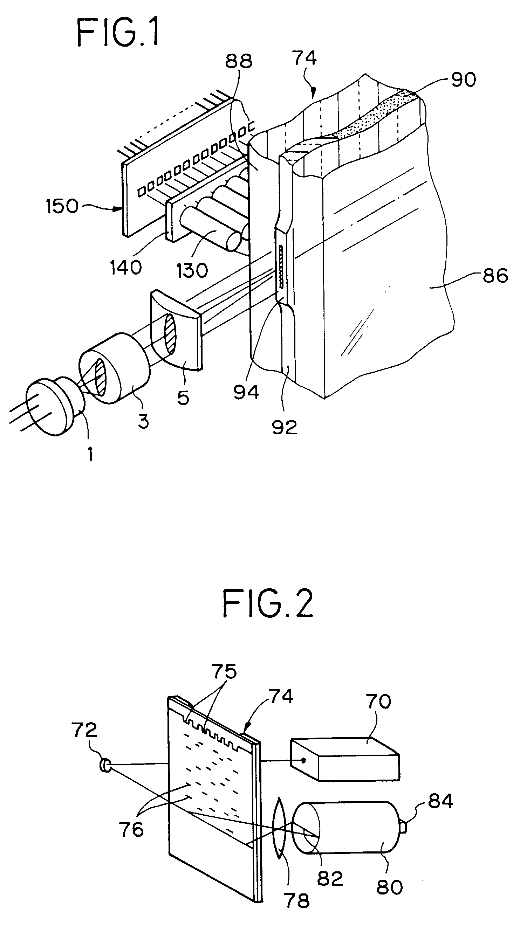

Japanese Laid-Open Application (Kokai) No. 21556/1988 teaches a DNA base sequencer that is adapted in such a way that a line on the gel in an apparatus for electrophoresis at which laser light is applied and the direction in which photodiodes are arranged are both perpendicular to the direction in which DNA fragments migrate in the apparatus. The setup of this apparatus is shown schematically in Fig. 2. In the apparatus shown in Fig. 2, a laser beam emitted from a light source 70 is reflected by a mirror 72 and launched horizontally from one side of the plate 74 at a predetermined point on the gel. As the fluorophore-labelled DNA fragments migrating through the gel pass through irradiated region, they will fluoresce successively. The horizontal position of fluorescence emission tells the species of a particular terminal base, the time difference from the start of migration tells the length of a particular fragment, and the emission wavelength identifies the sample under assay. The fluorescence from each electrophoresis track is condensed by a lens 78 to focus at a light-receiving area 82 in an image intensifier 80. The received signal is amplified and converted to an electric signal in a photodiode array 84 for the purpose of various measurements. The results of measurements are processed with a computer so that the sequences of the individual DNA fragments are calculated to determine the base sequence of the DNA at issue.

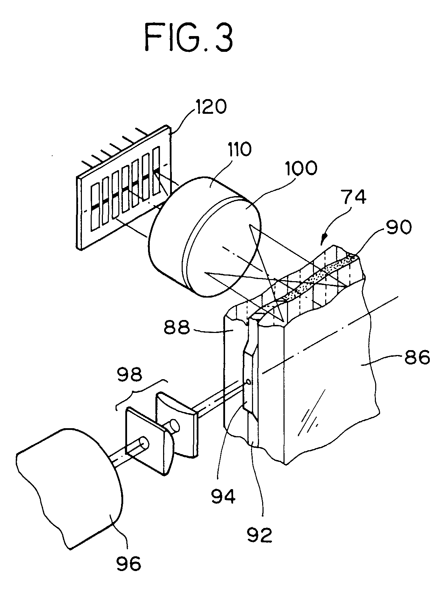

The apparatus shown in Fig. 2 uses an image intensifier camera in the light-receiving optics. The image intensifier camera is not only very expensive but also comparatively large as an optical device. Under the circumstances, an apparatus of the design shown in Fig. 3 was developed, which had an individual fluorescence detecting means provided in the detection position of each electrophoresis track. Each fluorescence detecting means consisted of a filter 100, a condensing lens 110 and a light-receiving device 120. Filter 100 is provided for rejecting the exited light and the background light so that fluorescence is transmitted selectively. Condensing lens 110 is used for insuring that the filtered fluorescence is focused at the light-receiving plane of the device 120. The light-receiving device 120 is typically a photodiodo composed of a silicon crystal having a pn junction.

As shown enlarged in Fig. 3, the electrophoresis plate 74 comprises two glass plates 86 and 88 between which is held an electrolytic gel layer 90 made of an electrophoretic gel, typically polyacrylamide gel. A spacer 92 is inserted between the two glass plates at both ends of their length for restricting the thickness of the electrolytic gel layer 90. An exciting light entrance window 94 is formed in the spacer 92 at one end so that exciting laser light from a laser light source 96 passing through a group of condenser lenses 98 is launched through the window 94 into the electrolytic gel layer 90. The laser light source 96 is typically a gas laser using He-Ne or argon as a lasing medium.

A DNA sequencer of the type shown in Fig. 3 which has exciting light applied to the gel layer from one lateral side has the following problems: (1) the beam of exciting laser light cannot be focused to a sufficiently small diameter over a long range so that the spatial resolution is limited; (2) in order to solve this problem, the beam was spread to an elliptical form in the direction of electrophoresis so that the spatial resolution could be improved in the pixels of the sensor; however, most of the beams emitted from gas lasers have a circular cross-sectional profile and complicated illumination optics is required to spread the beam to an elliptical form.

### SUMMARY FO THE INVENTION

An object, therefore, of the present invention is to provide a DNA base sequencer using exciting light illumination optics which is simple in construction and which yet is capable of spreading a laser beam to an elliptical form in the direction of electrophoresis.

This object of the invention can be attained by using a laser diode in place of the heretofore used gas laser.

### BRIEF DESCRIPTION OF THE DRAWINGS

Fig. 1 is a perspective view showing enlarged the essential part of an example of the DNA base sequencer of the invention;
Fig. 2 is a diagrammatic view showing the construction of the DNA base sequencer disclosed in Japanese Laid-Open Patent Application (kokai) No. 21556/1988; and
Fig. 3 is a perspective view sowing enlarged the essential part of a prior art DNA base sequencer.

### THE PREFERRED EMBODIMENTS OF THE INVENTION

Fig. 1 is a perspective view showing enlarged the essential part of a DNA base sequencer according to an embodiment of the invention. As shown, the apparatus of the invention uses not a gas laser but a laser diode 1 as a source of exciting light. An example of such diode is commercially available from Toshiba Corp. under the trade name TOLD9521, which emits at a wavelength of 635 nm to produce a power output of 5 mW. The exciting light it emits has a beam divergence angle of 7.5 × 37 degrees. As is apparent from this characteristic value, the laser diode emits a generally elliptical beam. Therefore, unlike a gas laser which emits a beam having a circular cross section, the laser diode does not require any special optics to produce an elliptical beam. Laser diodes having specifications other than those set forth above may of course be used in the apparatus of the invention.

In the DNA sequencer of the invention, the laser diode 1 is used in combination with a collimator lens 3 and a cylindrical lens 5. The light emitted from the laser diode 1 is converted to a parallel beam by means of the collimator lens 3, from which a beam having a diameter of 3 mm emerges. The emerging beam has a cross-sectional profile of 3 × 0.6 mm. The exciting light entrance window 94 in the spacer 92 has a lateral width (or thickness) of about 0.3 mm, so the cylindrical lens 5 converges the parallel beam to a diameter of about 0.1 mm, which is then launched into the electrolytic gel layer 90 in the direction of thickness.

The light-receiving optics (fluorescence detecting means) in the DNA base sequencer of the invention which is shown in Fig. 1 is known. The light-receiving optics shown in Fig. 1 was invented by the present inventors, applied for patent under date of September 28, 1993 and made public in Japanese Laid-Open Patent Application (kokai) No. 98276/1995, which is incorporated herein by reference. The basic components of the light-receiving optics are an index-distributed lens array (also known as a "Selfoc" lens array) 130, a filter 140 and a CCD line sensor 150. The fluorescence detecting means which is comprised of the index-distributed lens array, filter and CCD line sensor has the advantage of covering the electrophoresis plate from one end to the other and being capable effective fluorescence detection even if the sample to be assayed "smiles" during electrophoresis. As a further advantage, the index-distributed lens which is not a conventional camera lens is placed in contact with the sample to produce a focused fluorescent image and, hence, assures a uniform signal level from the center to either end of the electrophoresis plate. As a result, the uniformity in S/N ratio is so much improved that base length reading can be accomplished in lanes in the marginal portions of the electrophoresis plate as precisely as in the central portion. If index-distributed lenses are used as an array, adjacent lenses produce an overlap in image and a 1:1 erect image can be focused in the area where the lenses are arranged. This eliminates the interference between imaging optics for adjacent tracks which has been commonplace with conventional camera lenses. Needless to say, other fluorescence detecting means may also be employed.

As described on the forgoing pages, a DNA base sequencer characterized by the illumination optics of a simple construction can be provided by combining a collimator lens and a cylindrical lens with a laser diode having elliptical emission characteristics. The collimator lens used together with the laser diode spreads an emitted laser beam to produce precise parallel light. As a result, an illuminance distribution is obtained that is uniform across the width of the electrophoresis plate to thereby ensure uniform results of assay.

## Claims

1. A DNA base sequencer comprising a flat plate type gel electrophoretic means that has a multiple of tracks for electrophoresing DNA fragments and which is held in a vertical position, a light exciting laser light applying means that applies laser light to the respective tracks in said electrophoretic means from one lateral side thereof in such a way that it crosses said tracks at right angles, and a fluorescence detecting means that detects the fluorescence as generated from the DNA fragments illuminated with the laser light and which converts the detected fluorescence to an electric signal, wherein said laser light applying means comprises a laser diode.

2. The DNA base sequencer according to claim 1, wherein said laser light applying means uses the combination of a laser diode and a lens system to provide for the entrance of a beam spread to have an elliptical cross-sectional profile.

3. The DNA base sequencer according to claim 2, wherein said lens system comprises a collimator lens and a cylindrical lens.
